# EUROPEAN PATENT APPLICATION

(11) **EP 1 816 013 A1**
(43) Date of publication of application: **08.08.2007**
(21) Application number: 05807020.2
(22) Date of filing: 16.11.2005
(51) Int. Cl.: B60C 19/00, B60C 23/00, G01P 15/12, G01P 15/18

(54) **ACCELERATION SENSOR-MOUNTED TIRE**

(30) Priority: 19.11.2004 JP 2004335880
(71) Applicant: THE YOKOHAMA RUBBER CO., LTD., Tokyo 105-8685 (JP)
(72) Inventor: KITAZAKI, Tsuyoshi, THE YOKOHAMA RUBBER CO., LTD., Hiratsuka-shi, Kanagawa 254-0047 (JP); MATSUDA, Jun, THE YOKOHAMA RUBBER CO., LTD., Hiratsuka-shi, Kanagawa 254-0047 (JP); MIYASHITA, Naoshi, THE YOKOHAMA RUBBER CO., LTD., Hiratsuka-shi, Kanagawa 254-0047 (JP); HASHIMURA, Yoshiaki, THE YOKOHAMA RUBBER CO., LTD., Hiratsuka-shi, Kanagawa 254-0047 (JP); HATTORI, Yutaka, THE YOKOHAMA RUBBER CO., LTD., Hiratsuka-shi, Kanagawa 254-0047 (JP)
(74) Representative: Viktor, Rainer
(86) International application number: PCT/JP2005/021026
(87) International publication number: WO 2006/054591

(57) **Abstract**

An acceleration sensor-attached tire is provided which can detect acceleration in one arbitrary direction, in two or more directions where vectors are linearly independent of each other, or in two or more directions where vectors of the detected acceleration cross each other generated in a tire in a practical velocity range. A sensor unit 100 is embedded inside a tire, and the acceleration in three directions crossing each other and generated in the tire 300 is detected by an acceleration sensor provided in this sensor unit, and the detected acceleration is transmitted. The acceleration sensor is a micro electro mechanical systems (MEMS) type sensor and comprises a semiconductor acceleration sensor.

## Description

### Technical field

The present invention relates to an acceleration sensor-attached tire and particularly to an acceleration sensor-attached tire which detects acceleration in arbitrary one or more directions generated in a tire.

### Background art

As a detector for detecting acceleration generated in a tire, a detector which determines a road surface using a sensor for detecting acceleration in 1 to 3 directions generated inside the tire with rotation of the tire (See Patent Document 1, for example), a detector attached with two acceleration sensors: an acceleration sensor for detecting vibration in a tire circumferential direction and an acceleration sensor for detecting vibration in a tire width direction, so that a road-surface friction coefficient, a road-surface state and a tire running state are estimated (See Patent Document 2, for example), and a detector by which a tire behavior is monitored by detecting acceleration at least in the fore-and-aft direction and the right and left direction in a rotating tire (See Patent Document 3, for example).

The acceleration sensor used in the above can make detection with higher accuracy if it is directly attached to a tire rather than being attached to a wheel, hub, suspension or the like since the acceleration generated in a tire is less attenuated. For example, it is effective when a slight change in acceleration caused by deformation of a tire at grounding is detected.

On a 205/70R15 tire running at a speed of 20 km/h, a centrifugal force of approximately 10 G is generated.

There are biaxial acceleration sensors, triaxial acceleration sensors and the like which can detect acceleration in two or more directions with one acceleration sensor at the same time sold in the market, and some of them have the maximum value of several to several tens of G.
Patent Document 1: Japanese Patent Publication No. 2002-340863
Patent Document 2: Japanese Patent Publication No. 2003-182476
Patent Document 3: WO03/082643

### Disclosure of the invention

### Problems to be solved by the invention

However, When the biaxial acceleration sensor or triaxial acceleration sensor with the maximum value of several tens of G sold in the market is to be used for detection of acceleration generated in a tire within a practical speed range, there is a fear that mounting of the acceleration sensor to a tire is difficult since the acceleration sensor is too large or the acceleration sensor is failed or separated when it receives a large force at grounding.

Also, when two or more uniaxial sensors which can detect acceleration in a practical speed range are used in side-by-side arrangement the area of the acceleration sensor becomes large, or when two or more of the uniaxial sensors are used in the stacked state, the height or weight of the acceleration sensors is increased, the detection range of the acceleration sensor is limited, and it becomes difficult to detect acceleration caused by deformation of the tire with accuracy.

In view of the above problems, the present invention has an object to provide an acceleration sensor-attached tire which can detect acceleration in arbitrary one or more directions generated in a tire within a practical speed range.

### Means for solving the problems

In order to achieve the above object, the present invention proposes an acceleration sensor-attached tire in a tire provided with one or more sensor units for transmitting a detection result by a sensor for detecting a predetermined physical amount to outside the tire in a wireless manner, in which the sensor unit is provided with a MEMS type acceleration sensor and the acceleration sensor has means for detecting acceleration in arbitrary one or more directions at a mounting position.

According to the acceleration sensor-attached tire of the present invention, in a tire provided with one or more sensor units for transmitting the detection result by the sensor for detecting the predetermined physical amount to outside the tire, the sensor unit is provided with the MEMS type acceleration sensor. Therefore, the acceleration sensor can increase the maximum value of the detectable acceleration substantially without changing its area, height or weight.

Moreover, the acceleration in arbitrary one or more directions is detected by the acceleration sensor at the mounting position.

In order to achieve the above object, the present invention proposes an acceleration sensor-attached tire in which the acceleration sensor has means for detecting acceleration in two or more directions where vectors of the detected acceleration are linearly independent of each other at the mounting position.

According to the acceleration sensor-attached tire of the present invention, the acceleration in two or more directions in which the vectors of the detected acceleration are linearly independent of each other is detected at the mounting position. Therefore, without arranging the acceleration sensors for detecting the acceleration in one direction side by side or stacking them, the acceleration in two or more directions in which the vectors of the detected acceleration are linearly independent of each other can be detected at the same time within a practical speed range.

In order to achieve the above object, the present invention proposes an acceleration sensor-attached tire in which the acceleration sensor has means for detecting acceleration in two or more directions where the vectors of the detected acceleration cross each other at the mounting position.

According to the acceleration sensor-attached tire of the present invention, the acceleration in two or more directions in which the vectors of the detected acceleration cross each other is detected by the acceleration sensor at the mounting position. Therefore, without arranging the acceleration sensors for detecting the acceleration in one direction side by side or stacking them, the acceleration in two or more directions in which the vectors of the detected acceleration generated in a tire cross each other can be detected at the same time within a practical speed range.

Also, in the acceleration sensor-attached tire constructed as above, the present invention proposes an acceleration sensor-attached tire, in which the acceleration sensor is a semiconductor acceleration sensor having a silicon-piezo type diaphragm.

According to the acceleration sensor-attached tire of the present invention, the acceleration sensor is a semiconductor acceleration sensor having a silicon-piezo type diaphragm. Therefore, a resistance value of a piezo resistance is changed by deformation of the diaphragm and the acceleration can be detected.

Also, in the acceleration sensor-attached tire constructed as above the present invention proposes an acceleration sensor-attached tire in which the sensor unit has an area of 100 mm² or less and a height of 5 mm or less.

According to the acceleration sensor-attached tire of the present invention, the sensor unit has an area of 100 mm² or less and a height of 5 mm or less. With this size range of the sensor unit, mounting to a tire is easy, failure or separation can be prevented, and limitation on the detection range can be minimized. Thus, acceleration generated by deformation of the tire can be detected with accuracy.

Also, in the acceleration sensor-attached tire constructed as above, the present invention proposes an acceleration sensor-attached tire in which the acceleration sensor has means for detecting at least one of the acceleration in the tire circumferential direction, the acceleration in the tire width direction and the acceleration in the tire radial direction.

According to the acceleration sensor-attached tire of the present invention, at least one, or preferably two or more, of the acceleration in the tire circumferential direction, the acceleration in the tire width direction and the acceleration in the tire radial direction is detected by the acceleration sensor.

For example, if two or more acceleration is detected, a velocity in each direction at the mounting position can be obtained by applying first-order integration to the acceleration in each of the above directions, and displacement in each direction at the mounting position can be obtained by applying another first-order integration to each velocity. Therefore, it becomes possible to estimate deformation in a tire grounding plane at the tire grounding position using the displacement in the tire circumferential direction and the displacement in the tire width direction and moreover, it becomes possible to estimate deformation in the tire grounding plane and the deformation in a direction crossing the grounding plane using the displacement in the tire radial direction.

Also, in the acceleration sensor-attached tire constructed as above, the present invention proposes an acceleration sensor-attached tire in which the sensor unit is embedded inside the tire.

According to the acceleration sensor-attached tire of the present invention, the sensor unit is embedded inside the tire. Therefore, the acceleration caused by tire deformation can be detected with higher accuracy as compared with those at the other mounting positions.

Also, in the acceleration sensor-attached tire constructed as above, the present invention proposes an acceleration sensor-attached tire in which the sensor unit is provided on the surface of an inner liner.

According to the acceleration sensor-attached tire of the present invention, the sensor unit is provided on the surface of the inner liner. Therefore, as with the case of being embedded inside the tire, the acceleration caused by tire deformation can be detected with higher accuracy as compared with those at the other mounting positions.

### Advantages of the invention

According to the acceleration sensor-attached tire of the present invention, by providing an MEMS type acceleration sensor for detecting acceleration in arbitrary one or more directions at a mounting position in one or more sensor units provided on a tire, the maximum value of detectable acceleration can be increased substantially without changing the area, height or weight of the acceleration sensor, but the acceleration in arbitrary one or more directions generated in a tire can be detected within a practical speed range.

Also, by setting the area of the sensor unit at 100 mm² or less and the height at 5 mm or less, mounting to the tire is facilitated, failure or separation can be prevented, and limitation on the detection range can be minimized. Therefore, acceleration caused by tire deformation can be detected with accuracy.

The above objects and other objects, characteristics and benefits of the present invention will be made apparent from the description below and the attached drawings.

### Brief description of the drawings

Figure 1 is a view for explaining an attached state of a sensor unit in an embodiment of the present invention;
Figure 2 is a block diagram illustrating an electric system circuit of the sensor unit shown in Figure 1;
Figure 3 is an appearance perspective view illustrating a semiconductor acceleration sensor in the embodiment of the present invention;
Figure 4 is a sectional view on arrow of B-B line in Figure 3;
Figure 5 is a sectional view on arrow of C-C line in Figure 3;
Figure 6 is an exploded perspective view illustrating the semiconductor acceleration sensor shown in Figure 3;
Figure 7 is a block diagram illustrating an electric system circuit of the semiconductor acceleration sensor shown in Figure 3;
Figure 8 is a diagram illustrating a bridge circuit for detecting acceleration in the X-axis direction using the semiconductor acceleration sensor shown in Figure 3;
Figure 9 is a diagram illustrating a bridge circuit for detecting acceleration in the Y-axis direction using the semiconductor acceleration sensor shown in Figure 3;
Figure 10 is a diagram illustrating a bridge circuit for detecting acceleration in the Z-axis direction using the semiconductor acceleration sensor shown in Figure 3;
Figure 11 is a view for explaining an operation of the semiconductor acceleration sensor shown in Figure 3;
Figure 12 is a view for explaining an operation of the semiconductor acceleration sensor shown in Figure 3;
Figure 13 is a diagram for explaining acceleration in the X-, Y- and Z-axis direction detected by an acceleration sensor of the sensor unit in the embodiment of the present invention;
Figure 14 is a schematic block diagram illustrating a control device of a vehicle in the embodiment of the present invention;
Figure 15 is a diagram for explaining an attached state of a monitor device shown in Figure 14; and
Figure 16 is a block diagram illustrating an electric system circuit of the monitor device shown in Figure 14.

### Description of symbols

100 ... Sensor unit, 110 ... Antenna, 120 ... Antenna switch, 130 ... Rectifier circuit, 131, 132 ... Diode, 133 ... Capacitor, 134 ... Resistor, 140 ... Central processing portion, 141 ... CPU, 142 ... D/A converter circuit, 143 ... Memory portion, 150 ... Wave detection portion, 151 ... Diode, 152 ... A/D converter circuit, 160 ... Transmission portion, 161 ... Oscillation circuit, 162 ... Modulation circuit, 163 ... High-frequency amplifier circuit, 170 ... Sensor portion, 171 ... Acceleration sensor, 172 ... A/D converter circuit, 173 ... Pressure sensor, 174 ... A/D converter circuit, 200 ... Monitor device, 210 ... Radiation unit, 211 ... Antenna, 212 ... Transmission portion, 220 ... Wave receiving unit, 221 ... Antenna, 222 ... Wave detection portion, 230 ... Control portion, 240 ... Calculation portion, 300 ... Tire, 301 ... Cap tread, 302 ... Under tread, 303A, 303B ... Belt, 304 ... Carcass, 305 ... Inner liner, 306 ... Rim, 400 ... Tire house, 600 ... Vehicle control unit, 10 ... Acceleration sensor, 10A ... Semiconductor acceleration sensor, 11 ... Base, 12 ... Silicone substrate, 13 ... Diaphragm, 13a to 13d ... Diaphragm piece, 14 ... Thick film portion, 15 ... Plumb bob, 18A, 18B ... Support body, 181 ... Outer frame portion, 182 ... Support column, 183 ... Beam portion, 184 ... Projection portion, 184a ... Tip end, 31A to 31C ... Voltage detector, 32A to 32C ... DC power supply, Rx1 to Rx4, Ry1 to Ry4, Rz1 to Rz4 ... Piezo resistor (diffused resistor).

### Best mode for carrying out the invention

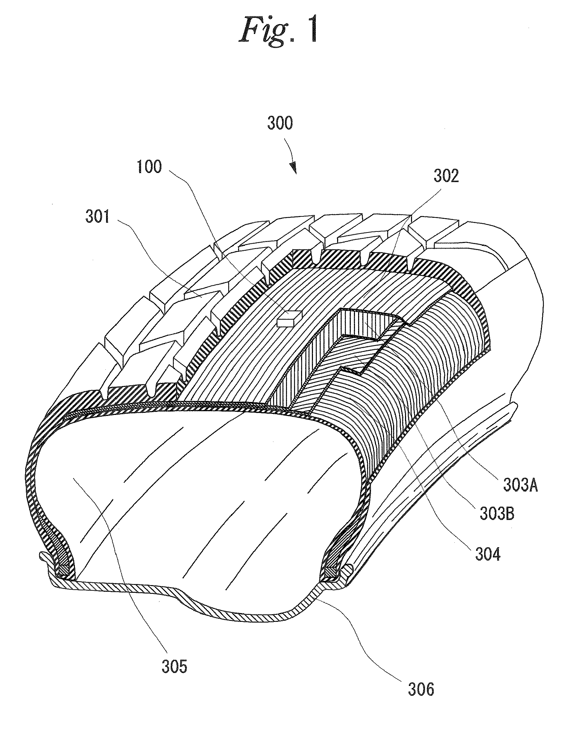

Figures 1 to 16 show an embodiment of the present invention.

First, the construction of an acceleration sensor-attached tire in the embodiment of the present invention will be described referring to Figure 1. Figure 1 is a view for explaining an attached state of a sensor unit in the embodiment of the present invention.

In this embodiment, the acceleration sensor-attached tire comprises a tire 300 and a sensor unit 100.

The tire 300 is a known tubeless radial tire, for example, comprising a known cap tread 301, an under tread 302, belts 303A, 303B, a carcass 304, an inner liner 305 and the like, and held in a vehicle or the like by a rim 306 and wheels, not shown.

The sensor unit 100 is embedded inside the tire, in the cap tread 301, for example, and acceleration in three directions crossing each other generated in the tire 300 is detected by an acceleration sensor, which will be described later, provided in this sensor unit 100, and the detected acceleration is converted to a digital value. Moreover, digital information including the digital value of the acceleration as a detection result is generated and transmitted.

In this figure, the sensor unit 100 is embedded inside the tire, but it may be provided on the surface of the inner liner 305. By this, mounting to the tire 300 is further facilitated as compared with mounting at the other positions and acceleration caused by deformation of the tire 300 can be detected with accuracy.

The mounting position of the sensor unit 100 is not limited to inside the tire or the surface of the inner liner 305, but it may be provided anywhere of the tire 300. Also, the number of sensor units 100 to be provided at the tire 300 is not limited to one but provision of two or more units is preferable.

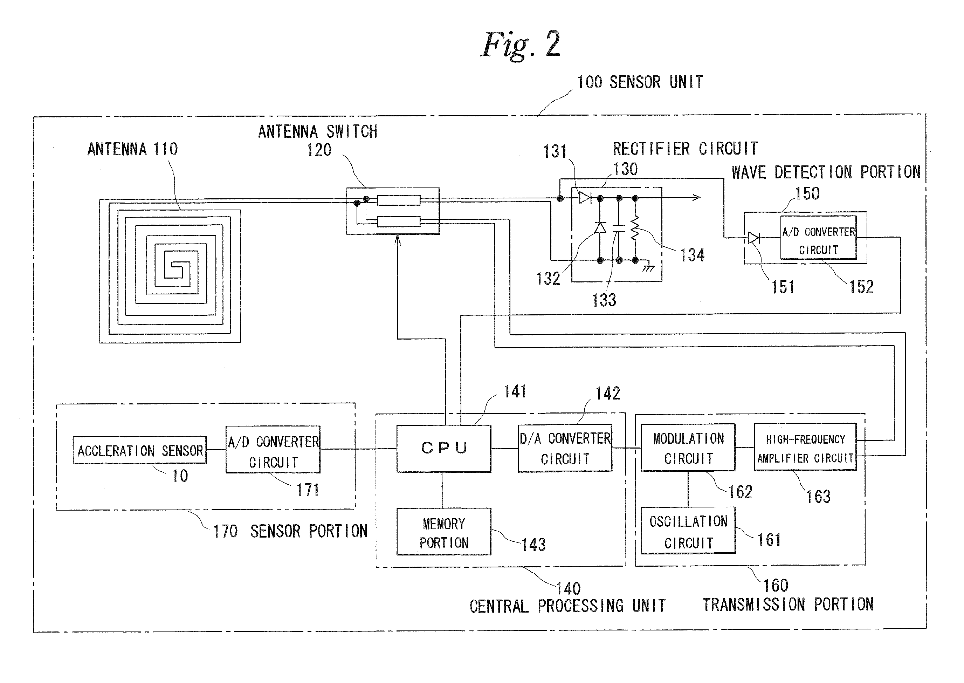

Next, the construction of the sensor unit shown in Figure 1 will be described referring to Figure 2.

The sensor unit 100 as a specific example of an electric system circuit of the sensor unit 100 comprises an antenna 110, an antenna switch 120, a rectifier circuit 130, a central processing portion 140, a wave detection portion 150, a transmission portion 160, and a sensor portion 170.

The antenna 110 communicates with the outside of the tire 300 using an electromagnetic wave of a predetermined frequency in a wireless manner.

The antenna switch 120 is comprised by an electronic switch, for example, and switches connection between the antenna 110 and the rectifier circuit 130 as well as the wave detection portion 150 and connection between the antenna 110 and the transmission portion 160 through control of the central processing portion 140.

The rectifier circuit 130 comprises diodes 131, 132, a capacitor 133, and a resistor 134 and forms a known full-wave rectifier circuit. To the input side of this rectifier circuit 130, the antenna 110 is connected through the antenna switch 120. The rectifier circuit 130 rectifies a high-frequency electric current excited at the antenna 110 and converts it to a direct current and outputs it as a driving power supply for the central processing portion 140, the wave detection portion 150, the transmission portion 160, and the sensor portion 170.

The central processing portion 140 comprises a known CPU 141, a digital/analog (hereinafter referred to as D/A) converter circuit 142, and a memory portion 143.

The CPU 141 is operated based on a program stored in a semiconductor memory of the memory portion 143, and when an electric energy is supplied for driving, it generates digital information including a digital value of an acceleration detection result obtained from the sensor portion 170 and identification information, which will be described later, and carries out processing to transmit the digital information to a monitor device. Also, the identification information specific to the sensor unit 100 is stored in the memory portion 143 in advance.

The memory portion 143 comprises a ROM in which a program for operating the CPU 141 is recorded and a non-volatile semiconductor memory which is electrically rewritable such as an EEPROM (electrically erasable programmable read-only memory), and the above identification information specific to the individual sensor unit 100 is stored in a region non-rewritably designated in the memory portion 143 in advance at manufacturing.

The wave detection portion 150 comprises a diode 151 and an A/D converter 152, and an anode of the diode 151 is connected to the antenna 110, while a cathode is connected to the CPU 141 of the central processing portion 140 through the A/D converter 152. By this, the electromagnetic wave received by the antenna 110 is detected by the wave detection portion 150 and a signal obtained by wave detection is converted to a digital signal and inputted to the CPU 141.

The transmission portion 160 comprises an oscillation circuit 161, a modulation circuit 162, and a high-frequency amplifier circuit 163 and modulates a carrier wave of a predetermined frequency constituted using a known PLL circuit or the like and oscillated by the oscillation circuit 161 at the modulation circuit 162 based on an information signal inputted from the central processing portion 140 and supplies it as a high-frequency current of a predetermined frequency to the antenna 110 through the high-frequency amplifier circuit 163 and the antenna switch 120.

The sensor portion 170 comprises an acceleration sensor 10 and an A/D converter circuit 171, and the A/D converter circuit 171 coverts an analog electric signal outputted from the acceleration sensor 10 and outputs it to the CPU 141.

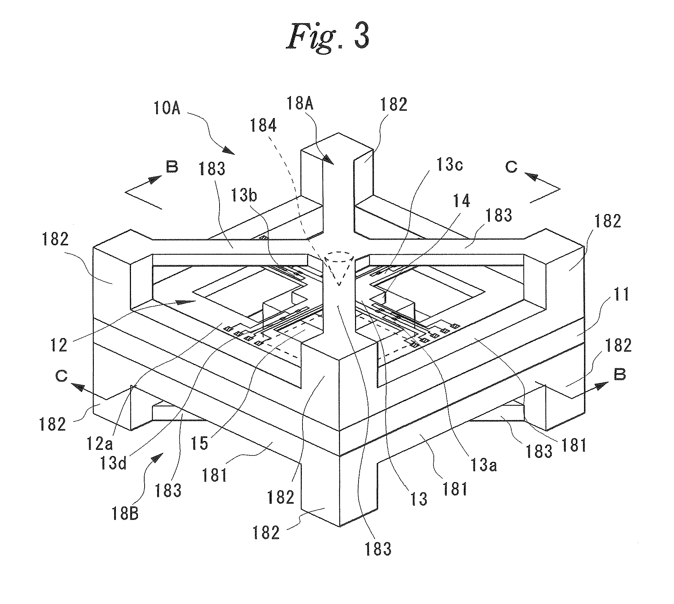

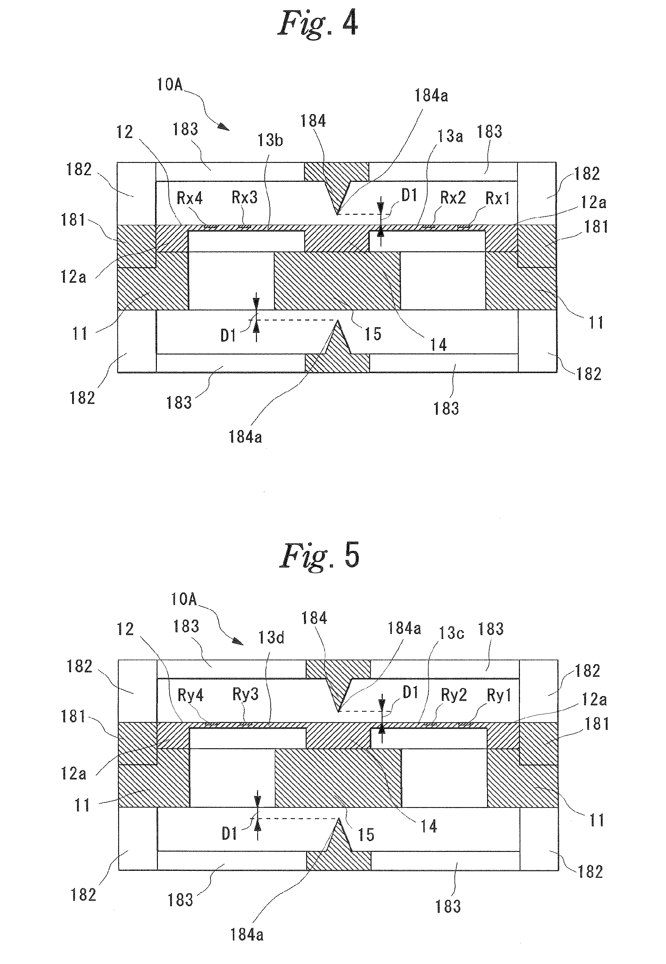

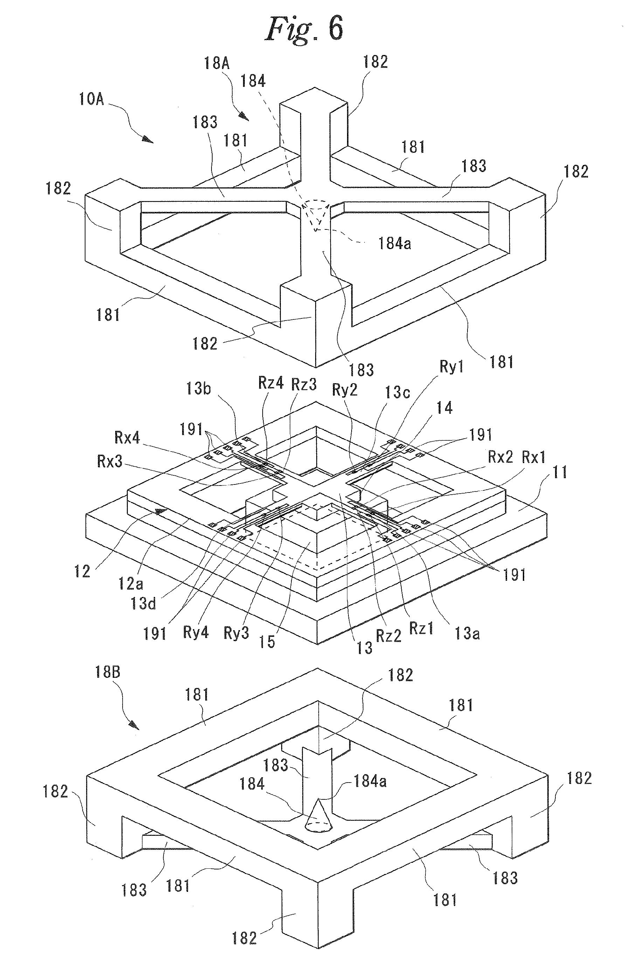

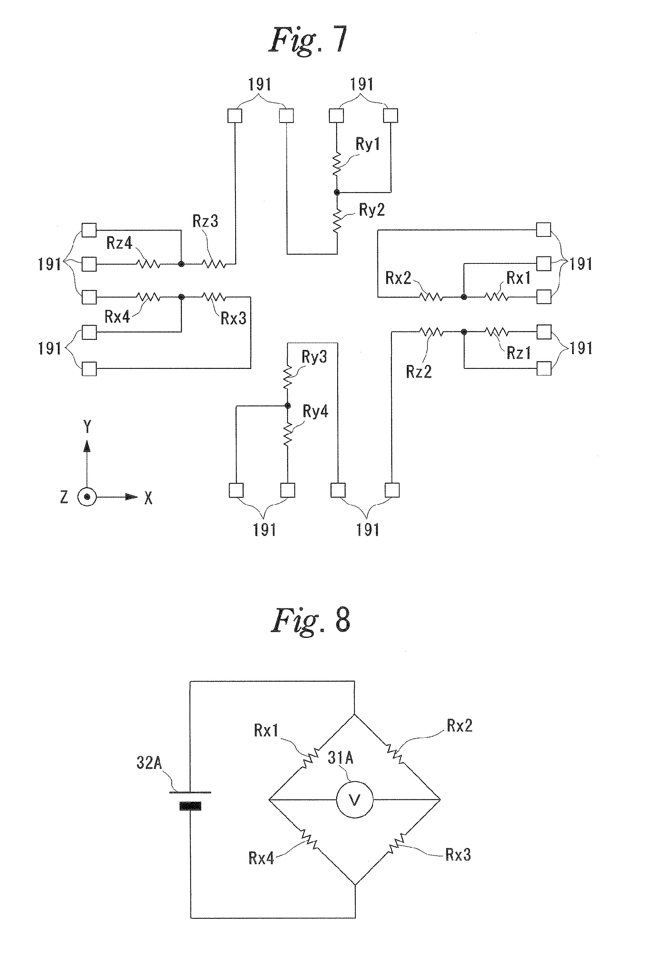

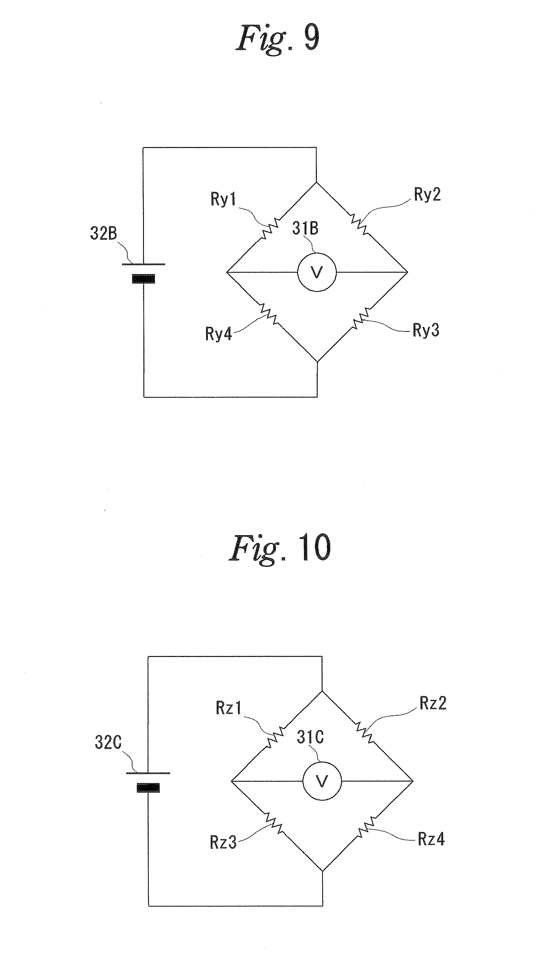

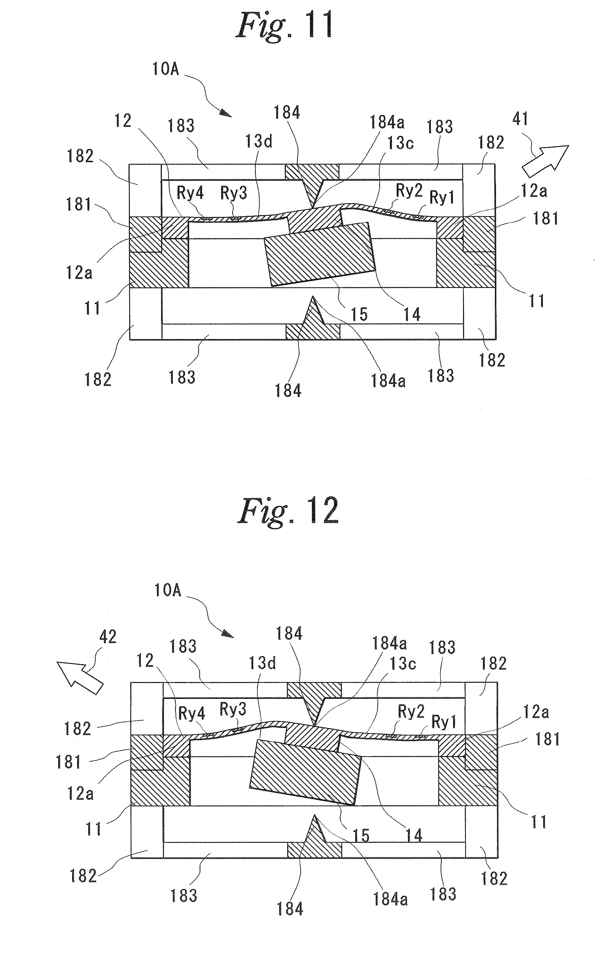

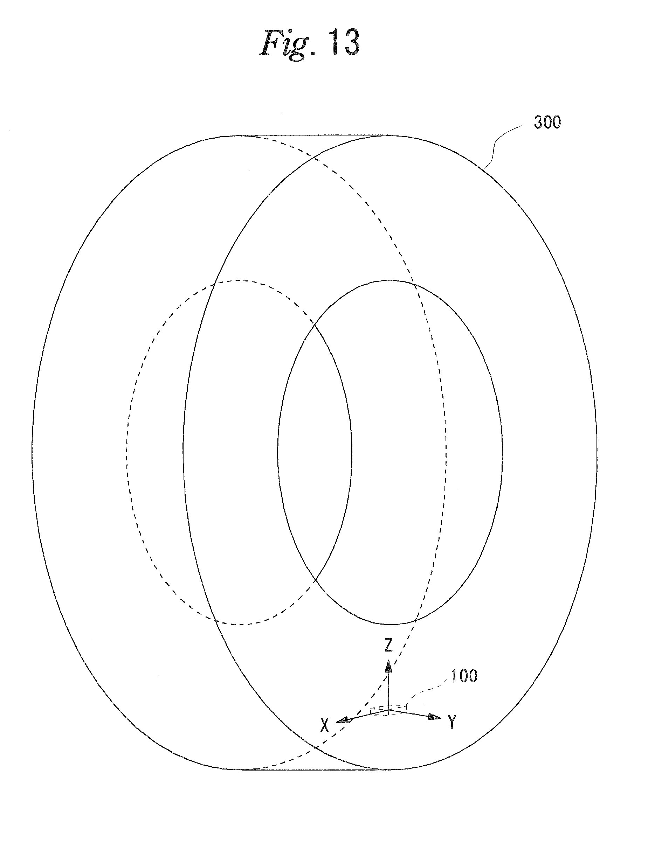

Next, the construction of the acceleration sensor shown in Figure 2 will be described referring to Figures 3 to 13. Figure 3 is an appearance perspective view showing the semiconductor acceleration sensor in the embodiment of the present invention, Figure 4 is a sectional view on arrow of B-B line in Figure 3, Figure 5 is a sectional view on arrow of C-C line in Figure 3, Figure 6 is an exploded perspective view illustrating the semiconductor acceleration sensor shown in Figure 3, Figure 7 is a block diagram illustrating an electric system circuit of the semiconductor acceleration sensor shown in Figure 3, Figure 8 is a diagram illustrating a bridge circuit for detecting acceleration in the X-axis direction using the semiconductor acceleration sensor shown in Figure 3, Figure 9 is a diagram illustrating a bridge circuit for detecting acceleration in the Y-axis direction using the semiconductor acceleration sensor shown in Figure 3, Figure 10 is a diagram illustrating a bridge circuit for detecting acceleration in the Z-axis direction using the semiconductor acceleration sensor shown in Figure 3, Figure 11 is a view for explaining an operation of the semiconductor acceleration sensor shown in Figure 3, Figure 12 is a view for explaining an operation of the semiconductor acceleration sensor shown in Figure 3, and Figure 13 is a diagram for explaining acceleration in the X-, Y-and Z-axis directions detected by an acceleration sensor of the sensor unit in the embodiment of the present invention.

The acceleration sensor 10 is an MEMS (micro electro mechanical systems) type acceleration sensor and comprises a semiconductor acceleration sensor as shown in Figures 3 to 6. In the figures, reference numeral 10A denotes a semiconductor acceleration sensor, comprising a base 11, a silicon substrate 12, and support bodies 18A, 18B.

The base 11 is in the rectangular frame shape, and the silicon substrate (silicon wafer) 12 is mounted on one opening of the base 11. On the outer peripheral portion of the base 11, outer frame portions 181 of the support bodies 18A, 18B are fixed.

The silicon substrate 12 is provided at the opening of the base 11, and a thin-film state diaphragm 13 in the cross shape is formed at the center in a wafer outer peripheral portion 12a. Piezo resistors (diffused resistors) Rx1 to Rx4, Ry1 to Ry4, and Rz1 to Rz4 are formed on the upper surface of each of diaphragm pieces 13a to 13d.

In detail, the piezo resistors Rx1, Rx2, Rz1, Rz2 are formed at one diaphragm piece 13a in the diaphragm pieces 13a, 13b arranged on a straight line, while the piezo resistors Rx3, Rx4, Rz3, Rz4 are formed at the other diaphragm piece 13b. Also, at one diaphragm piece 13c of the diaphragm pieces 13c, 13d arranged on a straight line crossing the diaphragm pieces 13a, 13b, the piezo resistors Ry1, Ry2 are formed, while the piezo resistors Ry3, Ry4 are formed on the other diaphragm piece 13d. Moreover, the piezo resistors Rx1 to Rx4, Ry1 to Ry4, and Rz1 to Rz4 are connected as shown in Figure 7 so that a resistance bridge circuit for detecting acceleration in three directions (X-axis, Y-axis, Z-axis directions) where vectors of the detected acceleration cross each other can be configured and are connected to a connection electrode 191 provided on the surface of the outer peripheral portion of the silicon substrate 12. The diaphragm 13 may be formed to configure the resistance bridge so that the acceleration in the three directions where the vectors of the detected acceleration are linearly independent of each other is detected, not limited to the three directions where the vectors of the detected acceleration cross each other.

Moreover, at an intersection of the diaphragm pieces 13a to 13d, a thick film portion 14 is formed on one face at the center of the diaphragm 13, and a rectangular plumb bob 15 made of glass, for example, is mounted on the surface of the thick film portion 14.

On the other hand, the support bodies 18A, 18B comprise four support columns 182 installed upright at four corners of the fixed portion, cross-shaped beam portions 183 provided so as to connect tip end portions of the support columns, and a projection portion 184 in the conical shape provided at the central intersection part of the beam portions 183.

The outer frame portion 181 is fixed while being fitted with the outer peripheral portion of the base 11 so that the projection portion 184 is located both on the other face side of the diaphragm 13, that is, the side where the plumb bob 15 does not exist, and the one side of the diaphragm 13, that is, the side where the plum bob does exist. A tip end 184a of the projection portion 184 is set to be located at a position with a distance D1 from the surface of the diaphragm 13 or the plumb bob 15. This distance D1 is set to a value that, even if acceleration is generated in a direction perpendicular to the surface of the diaphragm 13 and a force larger than a predetermined value is applied on both faces of the diaphragm 13 by this acceleration, displacement of each of the diaphragm pieces 13a to 13d can be restricted to prevent excessive stretching thereof.

When the semiconductor acceleration sensor 10A constructed as above is to be used, as shown in Figures 8 to 10, three resistance bridge circuits are configured. That is, as a bridge circuit for detecting acceleration in the X-axis direction, as shown in Figure 8, a positive terminal of a DC power supply 32A is connected to a connection point between one end of the piezo resistor Rx1 and one end of the piezo resistor Rx2, while a negative terminal of the DC power supply 32A is connected to a connection point between one end of the piezo resistor Rx3 and one end of the piezo resistor Rx4. Moreover, one end of a voltage detector 31A is connected to a connection point between the other end of the piezo resistor Rx1 and the other end of the piezo resistor Rx4, while the other end of the voltage detector 31A is connected to a connection point between the other end of the piezo resistor Rx2 and the other end of the piezo resistor Rx3.

Also, as a bridge circuit for detecting acceleration in the Y-axis direction, as shown in Figure 9, a positive terminal of a DC power supply 32B is connected to a connection point between one end of the piezo resistor Ry1 and one end of the piezo resistor Ry2, while a negative terminal of the DC power supply 32B is connected to a connection point between one end of the piezo resistor Ry3 and one end of the piezo resistor Ry4. Moreover, one end of a voltage detector 31B is connected to a connection point between the other end of the piezo resistor Ry1 and the other end of the piezo resistor Ry4, while the other end of the voltage detector 31B is connected to a connection point between the other end of the piezo resistor Ry2 and the other end of the piezo resistor Ry3.

Also, as a bridge circuit for detecting acceleration in the Z-axis direction, as shown in Figure 10, a positive terminal of a DC power supply 32C is connected to a connection point between one end of the piezo resistor Rz1 and one end of the piezo resistor Rz2, while a negative terminal of the DC power supply 32C is connected to a connection point between one end of the piezo resistor Rz3 and one end of the piezo resistor Rz4. Moreover, one end of a voltage detector 31C is connected to a connection point between the other end of the piezo resistor Rz1 and the other end of the piezo resistor Rz3, while the other end of the voltage detector 31C is connected to a connection point between the other end of the piezo resistor Rz2 and the other end of the piezo resistor Rz4.

According to the semiconductor acceleration sensor 10A constructed as above, when a force generated with the acceleration applied to the semiconductor acceleration sensor 10A is applied to the plumb bob 15, distortion is generated in each of the diaphragm pieces 13a to 13d, by which resistance values of the piezo resistors Rx1 to Rx4, Ry1 to Ry4, and Rz1 to Rz4 are changed. Therefore, by forming resistance bridge circuits by the piezo resistors Rx1 to Rx4, Ry1 to Ry4, and Rz1 to Rz4 provided at each of the diaphragm pieces 13a to 13d, acceleration in the X-axis, Y-axis, Z-axis directions where the vectors of the detected acceleration cross each other can be detected at the same time. The resistance bridge circuit may be constructed so as to detect acceleration in arbitrary one or two directions of three directions where the vectors of the detected acceleration cross each other or linearly independent of each other, but the acceleration in two or more directions where the vectors of the detected acceleration cross each other is preferably detected.

Moreover, as shown in Figures 11 and 12, if such acceleration is applied that forces 41, 42 including a force component in a direction perpendicular to the face of the diaphragm 13 act, the diaphragm 13 is distorted and stretched in a direction where the forces 41, 42 act when a force larger than a predetermined value is applied on the other face side of the diaphragm 13, but since the displacement is limited by the support by the tip end 184a of the projection portion 184, the diaphragm pieces 13a to 13d are not stretched to the maximum. By this, even if a force larger than the predetermined value is applied to the other face side of the diaphragm 13, the position of the plumb bob 15 is changed with the tip end 184a of the projection portion 184 as the fulcrum, and acceleration in the direction in parallel with the face of the diaphragm 13 can be detected.

Also, the weight of the plumb bob 15 can be changed arbitrarily in the manufacturing process, and since distortion generated in each of the diaphragm pieces 13a to 13d is changed by the weight of the plumb bob 15, the maximum value of the acceleration in the X-axis, Y-axis and Z-axis directions is changed. Moreover, the weight of the plumb bob 15 gives little influence on the area, height and weight of the base 11, the silicon substrate 12, the support bodies 18a, 18b and the like, and the area, height and weight of the semiconductor acceleration sensor 10A are kept substantially constant regardless of the weight of the plumb bob 15. By this, the maximum value of the detectable acceleration of the acceleration sensor 10 can be increased substantially without changing its area, height and weight.

The sensor unit 100 is provided, as shown in fig. 13, so that the x-axis corresponds to the circumferential direction of the tire 300, the Y-axis to the width direction of the tire, and the Z-axis to the radial direction of the tire, and the acceleration in the circumferential direction, width direction and radial direction at the mounting position can be detected by the semiconductor acceleration sensor 10A.

Even if the X-, Y-, or Z-axis direction does not correspond to the circumferential, width or radial direction, the acceleration in the circumferential direction, width direction and radial direction of the tire 300 can be obtained by correcting the detected acceleration on the basis of a predetermined direction, angle or the like to provide the sensor unit 100. Also, there are accelerations in the positive direction and the acceleration in the negative direction as the acceleration generated in each of the X-, Y-, and Z-axis directions, but the both acceleration can be detected in this embodiment.

Also, in this embodiment, the sensor unit 100 is set with the area not more than 100 mm² and the height not more than 5 mm. With the sensor unit 100 in this size range, mounting to the tire 300 is easy, failure or separation can be prevented, and limitation on a detection range can be minimized. Thus, acceleration caused by deformation of the tire 300 can be detected with accuracy.

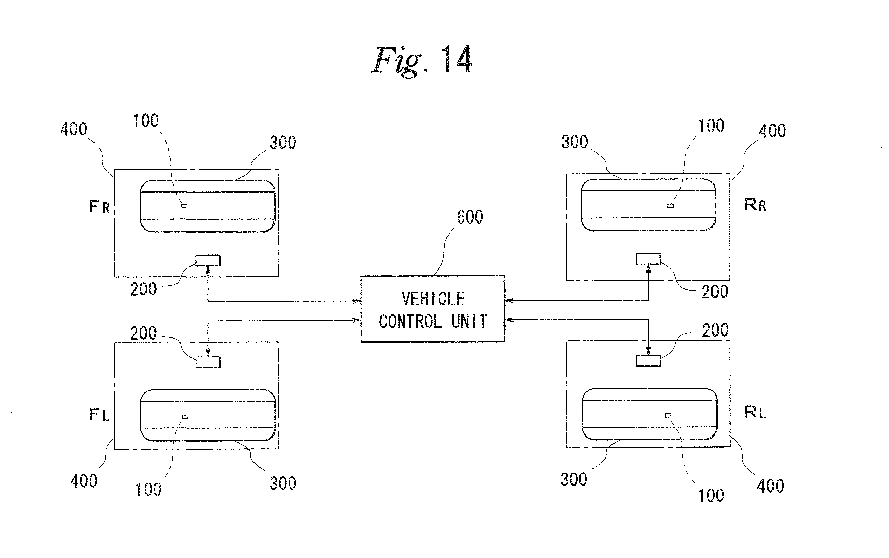

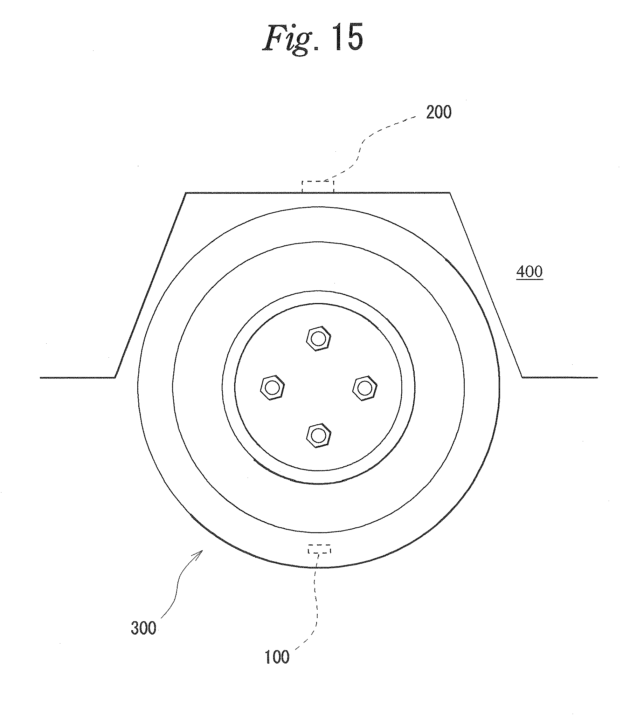

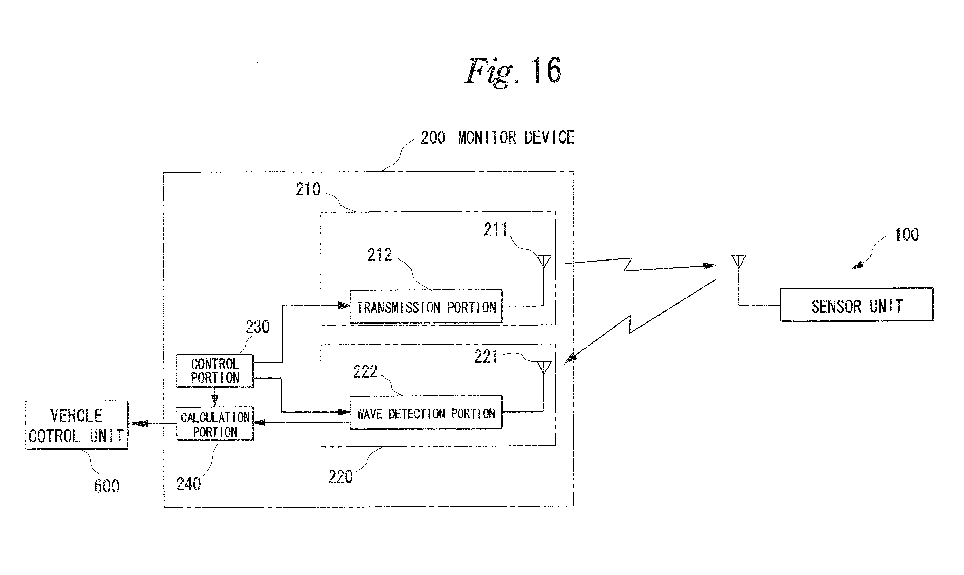

Next, a use example of the acceleration sensor-attached tire will be described referring to Figures 14 to 16. Figure 14 is a schematic block diagram illustrating a control device of a vehicle in the embodiment of the present invention, Figure 15 is a diagram for explaining an attached state of a monitor device shown in Figure 14, and Figure 16 is a block diagram illustrating an electric system circuit of the monitor device shown in Figure 14.

In Figure 14, reference numeral 100 denotes a sensor unit, reference numeral 200 for a monitor device, reference numeral 300 for a tire, reference numeral 400 for a tire house, and reference numeral 600 for a vehicle control unit.

Also, as shown in Figure 15, the sensor unit 100 is provided in each tire 300 of a vehicle, and moreover, the monitor device 200 is fixed to the tire house 400 of each tire 300.

Each monitor device 200 is connected to the vehicle control unit 600 via a cable and operated by electric energy sent from the vehicle control unit 600.

The electric system circuit of the monitor device 200 comprises, as shown in Figure 16, a radiation unit 210, a wave receiving unit 220, a control portion 230, and a calculation portion 240. The control portion 230 and the calculation portion 240 are comprised by a known CPU and a memory circuit made of a ROM storing a program for operating the CPU, a RAM required for calculation processing and the like.

The radiation unit 210 comprises an antenna 211 and a transmission portion 212 for radiating an electromagnetic wave of a predetermined frequency and radiates an electromagnetic wave of a predetermined frequency from the antenna 211 based on an instruction from the control portion 230.

One example of the transmission portion 212 may be construction from the oscillation circuit 161, the modulation circuit 162, and the high-frequency amplifier circuit 163 similarly to the transmission portion 160 of the sensor unit 100. By this, the electromagnetic wave of a predetermined frequency is radiated from the antenna 211. The high-frequency power outputted from the transmission portion 212 is set to a value that can supply electric energy from the antenna 211 for radiation of the electromagnetic wave of the monitor device 200 to the sensor unit 100. By this, acceleration of each tire 300 can be detected by each monitor device 200.

The wave receiving unit 220 comprises an antenna 221 for receiving an electromagnetic wave of a predetermined frequency and a wave detection portion 222, receives the electromagnetic wave of the second frequency received by the antenna 221 based on the instruction from the control portion 230, converts a signal obtained by wave detection to a digital signal and outputs it to the calculation portion 240. one example of the wave detection portion 222 may be a circuit similar to the wave detection portion 150 of the sensor unit 100.

When the electric energy is supplied from the vehicle control unit 600 and operation is started, the control portion 230 drives the transmission portion 212 so as to radiate the electromagnetic wave for a predetermined time and then, drives the wave detection portion 222 for a predetermined time and outputs a digital signal from the wave detection portion 222 to the calculation portion 240. The calculation portion 240 calculates the acceleration based on this digital signal and outputs it to the vehicle control unit 600. After that, the control portion 230 repeats the processing similar to the above.

The vehicle control unit 600 comprises a control circuit provided with a known CPU and carries out vehicle control such as braking control, driving control, stability control and the like by taking in detection results outputted from each monitor device 200 and detection results outputted from a rotation number sensor, a throttle position sensor, a steering angle sensor and the like, not shown.

That is, the vehicle control unit 600 can obtain a velocity in each direction at the mounting position by first-order integration of the acceleration in the above tire circumferential direction, width direction, radial direction obtained from each monitor device 200, and a displacement in each direction at the mounting position can be obtained by further performing first-order integration of the velocity. By this, deformation in a grounding plane at the grounding position of the tire 300 can be estimated using the displacement in the tire circumferential direction and the displacement in the tire width direction, and moreover, the deformation in the direction crossing the grounding plane can be estimated along with the deformation in the grounding plane of the tire 300 using the displacement in the tire radial direction.

Therefore, the vehicle control unit 600 can control a braking force by driving a brake of each tire 300, for example, based on deformation of each tire 300 estimated from the acceleration detected by the acceleration sensor 10.

According to the above-mentioned acceleration sensor-attached tire, since one or more sensor units 100 provided at the tire 300 comprise the MEMS type acceleration sensor 10 for detecting the acceleration in one arbitrary direction, in two or more directions where the vectors of the detected acceleration are linearly independent of each other, or in two or more directions where the vectors of the detected acceleration cross each other at the mounting position, the maximum value of the detectable acceleration can be increased substantially without changing the area, height or weight of the acceleration sensor 10, and the acceleration in one arbitrary direction, in two or more directions where the vectors of the detected acceleration are linearly independent of each other, or in two or more directions where the vectors of the detected acceleration cross each other generated in the tire 300 in a practical velocity range can be detected without arranging the acceleration sensors for detecting acceleration in one direction side by side or stacking them.

Also, by setting the sensor unit 100 with the area not more than 100 mm² and the height not more than 5 mm, mounting to the tire 300 is facilitated, failure or separation can be prevented, and limitation on the detection range can be minimized. Thus, acceleration caused by deformation of the tire 300 can be detected with accuracy.

The construction of the present invention is not limited to the above embodiments but can be changed in a range not departing from the gist of the present invention.

### Industrial applicability

Since the acceleration in arbitrary one or more directions generated in a tire in a practical velocity range can be detected by an acceleration sensor-attached tire provided with one or more sensor units having an MEMS type acceleration sensor, the present invention can be applied to a vehicle stability control system or an anti-lock brake system estimating a road-surface friction coefficient, a road-surface state, and a tire running state.

## Claims

1. An acceleration sensor-attached tire, comprising
one or more sensor units for transmitting a detection result by a sensor for detecting a predetermined physical amount to outside the tire in a wireless manner, wherein:
said sensor unit is provided with an MEMS type acceleration sensor; and
said acceleration sensor has means for detecting acceleration in arbitrary one or more directions at a mounting position.

2. The acceleration sensor-attached tire according to claim 1, wherein
said acceleration sensor has means for detecting acceleration in two or more directions where vectors of the detected acceleration are linearly independent of each other at the mounting position.

3. The acceleration sensor-attached tire according to claim 1, wherein
said acceleration sensor has means for detecting acceleration in two or more directions where the vectors of the detected acceleration cross each other at the mounting position.

4. The acceleration sensor-attached tire according to claim 1, wherein
said acceleration sensor is a semiconductor acceleration sensor having a silicon-piezo type diaphragm.

5. The acceleration sensor-attached tire according to claim 1, wherein
said sensor unit has an area of 100 mm² or less and a height of 5 mm or less.

6. The acceleration sensor-attached tire according to claim 1, wherein
said acceleration sensor has means for detecting at least one of the acceleration in the tire circumferential direction, the acceleration in the tire width direction and the acceleration in the tire radial direction.

7. The acceleration sensor-attached tire according to claim 1, wherein
said sensor unit is embedded inside the tire.

8. The acceleration sensor-attached tire according to claim 1, wherein
said sensor unit is provided on the surface of an inner liner.
